# EUROPEAN PATENT APPLICATION

(11) **EP 4 239 710 A1**
(43) Date of publication of application: **06.09.2023**
(21) Application number: 22807877.0
(22) Date of filing: 13.05.2022
(51) Int. Cl.: H01M 4/13, H01M 4/62, H01M 4/36, H01M 10/0525, H01M 4/133, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 14.05.2021 KR 20210062918
(71) Applicant: Samsung SDI Co., Ltd., Yongin-si, Gyeonggi-do 17084 (KR)
(72) Inventor: LEE, Kang Hee, Yongin-si, Gyeonggi-do 17084 (KR); ARIKAWA, Yuuya, Yongin-si, Gyeonggi-do 17084 (KR); BAE, Woo Jin, Yongin-si, Gyeonggi-do 17084 (KR)
(74) Representative: Marks & Clerk LLP
(86) International application number: PCT/KR2022/006878
(87) International publication number: WO 2022/240230

(57) **Abstract**

Provided are a negative electrode for a rechargeable lithium battery and a rechargeable lithium battery including same, the negative electrode for a rechargeable lithium battery including a negative electrode active material layer which comprises a boron compound and negative electrode active material.

## Description

### TECHNICAL FIELD

It relates to a negative electrode for a rechargeable lithium battery and a rechargeable lithium battery including the same.

### BACKGROUND ART

A rechargeable lithium battery which has recently drawn attention as a power source for small portable electronic devices, uses an organic electrolyte solution and thereby has twice or more as high a discharge voltage as a conventional battery using an alkali aqueous solution and accordingly, high energy density.

As for a positive active material of a rechargeable lithium battery, oxides including lithium and a transition metal with a structure capable of intercalating/deintercalating lithium ions, such as LiCoO₂, LiMn₂O₄, LiNi₁₋ₓCoₓO₂ (0 < x < 1), and the like have been mainly used.

As for negative active materials, various carbon-based materials such as artificial graphite, natural graphite, and hard carbon capable of intercalating and deintercalating lithium ions or non carbon-based materials such Si and the like, have been used.

Recently, researches for rechargeable lithium batteries exhibiting good rapid charge performance have been conducted.

### TECHNICAL PROBLEM

One embodiment provides a negative electrode for a rechargeable lithium battery exhibiting excellent rapid charge performance.

Another embodiment provides a rechargeable lithium battery including the negative electrode.

### TECHNICAL SOLUTION

According to one embodiment, a negative electrode for a rechargeable lithium battery including a negative electrode active material layer which includes a boron compound, a negative electrode active material, and an aqueous binder is provided.

The boron compound may be B₂O₃, H₃BO₃, or combinations thereof.

An amount of the boron compound may be 0.1 wt% to 3 wt% based on the total, 100 wt%, of the negative electrode active material layer. An amount of boron included in the negative electrode active material layer may be 0.1 wt% to 3 wt% based on the total, 100 wt%, of the negative electrode active material layer.

The negative electrode active material may be a silicon-based negative electrode active material, a carbon-based negative electrode active material, or combinations thereof.

The boron compound and the negative electrode may be presented in the negative electrode active material layer in a physical mixture.

The negative electrode may be prepared by coating a composition for an active material layer prepared by mixing the boron compound and the negative electrode active material in a solvent, on a current collector.

According to another embodiment, a rechargeable lithium battery including the negative electrode, a positive electrode including a positive electrode active material, and a non-aqueous electrolyte is provided.

Other embodiments are included in the following detailed description.

### ADVANTAGEOUS EFFECTS

A negative electrode for a rechargeable lithium battery according to one embodiment may exhibit excellent high rate charge and discharge characteristics.

### BRIEF DESCRIPTION OF THE DRAWING

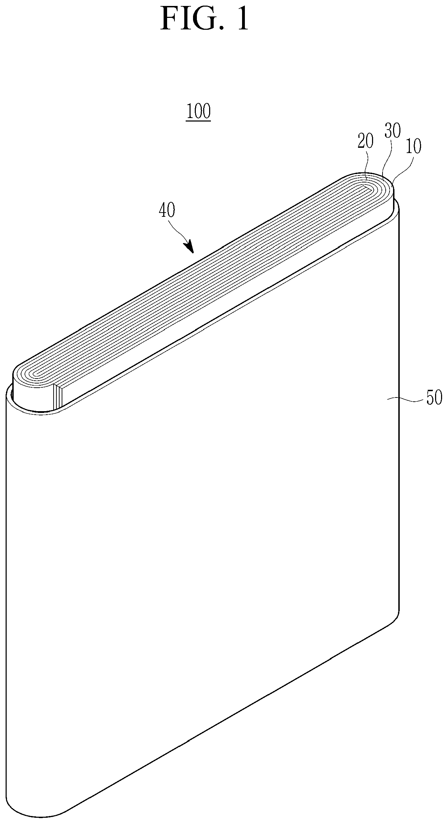

FIG. 1 is a schematic view of a rechargeable lithium battery according to another embodiment.

### BEST MODE FOR INVENTION

Hereinafter, embodiments of the present invention are described in detail. However, these embodiments are merely examples, the present invention is not limited thereto and the present invention is defined by the scope of claims.

A negative electrode for a rechargeable lithium battery according to one embodiment includes a negative electrode active material layer including a boron compound, a negative electrode active material, and an aqueous binder.

In the negative electrode active material layer, the boron compound, the negative electrode active material, and the aqueous binder may be physically mixed to present in the negative electrode active material layer, and it indicates that the negative electrode active material is not substantially coated with the boron compound. In addition, boron is not doped into the negative electrode active material, as the boron included in the boron compound is separately presented from the negative electrode active material in the negative electrode active material layer.

The negative electrode including such a negative electrode active material layer may be prepared by a composition for an active material layer which is obtained by mixing the boron compound, the negative electrode active material, and an aqueous binder in a solvent, on a current collector.

The boron compound may be B₂O₃, H₃BO₃, or combinations thereof.

An amount of the boron compound may be 0.1 wt% to 3 wt%, or 0.2 wt% to 2 wt% based on the total, 100 wt%, of the negative electrode active material layer. When the amount of the boron compound is within the range, the interfacial resistance of the negative electrode may be reduced.

As such, the boron compound is mixed with the negative electrode active material to present in the negative electrode active material layer, so that thickening of an SEI thin layer formed on a surface of the negative electrode during charging and discharging of a negative electrode such as a negative electrode active material layer may be effectively suppressed, a lithium diffusion rate may be improved, and charge transfer resistance (Rct) may also be reduced.

An amount of boron included in the negative electrode active material layer may be 0.1 wt% to 3 wt%, or 0.2 wt% to 2 wt% based on the total, 100 wt%, of the negative electrode active material.

If the boron compound is directly coated on the active material, a surface of the active material coated with the boron compound having low charge transfer resistance, is covered with a binder having high resistance, so that the reduction in the charge transfer resistance by the boron compound may not be sufficiently realized. Whereas when the boron-based compound is added to the negative electrode slurry to prepare a negative electrode, the aqueous binder, for example, a styrene-butadiene rubber binder, chemically reacts with the boron-based compound to reduce the charge transfer resistance of the surface of the active material and a portion of the binder, and more improvements may be obtained than coating the boron compound on the surface of the active material.

The negative electrode active material may be a Si-based active material, a carbon-based active material, or combinations thereof. The Si-based active material may be Si, a Si-C composite, SiOₓ (0 < x < 2), and an Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof but not Si) or combinations thereof.

The carbon-based active material may be crystalline carbon, amorphous carbon, or a mixture thereof, or crystalline carbon coated with amorphous carbon. The crystalline carbon may be graphite such as unspecified shape, sheet, flake, spherical, or fiber shaped natural graphite or artificial graphite, and the amorphous carbon may be soft carbon, hard carbon, mesophase pitch carbide, sintered cokes, and the like. In case of using crystalline carbon coated with amorphous carbon as the negative active a thickness of amorphous carbon and an amount ratio of amorphous carbon and crystalline carbon may be suitably controlled, but it is not specifically limited thereto.

An amount of the negative electrode active material may be 91 wt% to 99 wt%, or 93 wt% to 98 wt% based on the total, 100 wt% of the negative electrode active material layer.

The aqueous binder may include a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, or combinations thereof.

The negative electrode according to one embodiment includes an aqueous binder as the binder, and if an organic binder such as polyvinylidene fluoride is used, the binder does not bond to the boron compound, thereby insufficiently reducing the charge transfer resistance. In addition, use of the organic-based binder causes making it impossible to uniformly dissolve the boron compound in the composition for preparing the negative electrode active material, so that the electrode may not be stably fabricated.

Furthermore, in the negative electrode according to one embodiment including such a composition, a chemical bond may occur during drying of the negative electrode preparation, and a C-O-B bond may be presented on a surface, which is a bond obtained from only using of the aqueous binder. If an organic-based binder is used, the effect of reducing the charge transfer resistance by the boron compound may not be obtained. Furthermore, the C-O-B bond on the surface may be measured by an XPS peak. In addition, the presence of the CO-B bond on the surface of the negative electrode may increase a thermal decomposition temperature of a carboxymethyl cellulose thickener by about 60 °C in a thermogravimetric analysis, and thus, the safety may be more improved.

An amount of the aqueous binder may be 0.9 wt% to 6 wt% based on the total, 100 wt%, of the negative electrode active material layer.

The negative electrode active material layer may further include a cellulose-based compound for providing viscosity, as a thickener. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative electrode active material.

The negative electrode active material layer may further include a conductive material. The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof. When the negative electrode active material layer further includes the conductive material, the negative electrode active material may be included at 91 wt% to 98.8 wt%, the boron compound may be included at 0.1 wt% to 3 wt%, the aqueous binder may be included at 1 wt% to 3 wt%, and the conductive material may be included at 0.1 wt% to 3 wt%.

The negative electrode may be prepared by mixing the negative electrode active material, the boron compound, the aqueous binder, and optionally, the conductive material in a solvent to prepare a slurry for the negative electrode active material layer, coating the slurry for the negative electrode active material layer on the current collector, drying, and pressurizing. Such a negative electrode preparation method is well known and thus is not described in detail in the present specification.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The solvent may be water.

According to one embodiment, a rechargeable lithium battery including the negative electrode, the positive electrode, and an electrolyte, is provided. In the rechargeable lithium battery, an amount of boron included in the negative electrode, i.e., an amount of boron in the negative electrode active material layer, may be 0.1 wt% to 3 wt%, or 0.2 wt% to 2 wt% based on the total, 100 wt%, of the negative electrode active material layer. The amount of boron may be obtained by disassembling the rechargeable lithium battery to separate a negative electrode and extracting it with water to quantity an amount of boron dissolved in water.

The positive electrode includes a current collector, and a positive active material layer formed on the current collector and including the positive active material.

The positive electrode active material may include lithiated intercalation compounds that reversibly intercalate and deintercalate lithium ions, and specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D₂ (0.90 ≤ a≤1.8, 0 ≤ b≤ 0.5); LiₐA_{1-b}X_{b}O_{2-c}D_{c} (0.90 ≤ a ≤ 1.8, 0 ≤ b 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}Dₐ (0.90 ≤ a ≤1.8, 0 ≤ b ≤ 0.5, 0 ≤ c ≤ 0.5, 0 < α ≤2); LiₐNi_{1-b-c}Co_{b}X_{c}O_{2-α}T_{α} (0.90 ≤ a≤1.8, 0 ≤ b ≤ 0.5, 0 ≤ c ≤ 0.5, 0 < α < 2); LiₐNi_{1-b-c}Co_{b}X_{c}O_{2-α}T₂ (0.90 ≤ a ≤1.8, 0 ≤ b 0.5, 0 ≤ c ≤ 0.5, 0 < α < 2); LiₐNi_{1-b-c}Mn_{b}X_{c}D_{α} (0.90 ≤ a ≤ 1.8, 0 ≤ b ≤ 0.5, 0 ≤ c 0.5, 0 < α ≤2); LiₐNi_{1-b-c}Mn_{b}X_{c}O_{2-α}T_{α} (0.90 ≤ a ≤ 1.8, 0 ≤ b ≤ 0.5, 0 ≤ c 0.5, 0 < α < 2); LiₐNi_{1-b-c}Mn_{b}X_{c}O_{2-α}T₂ (0.90 ≤ a≤ 1.8, 0 ≤ b 0.5, 0 ≤ c 0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤0.1); LiₐNiG_{b}O₂ (0.90 ≤ a ≤ 1.8, 0.001 ≤ b ≤ 0.1) LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂ PO₄₃ (0 ≤ f ≤2); Li _{(3-f)}Fe₂ PO₄₃ (0 ≤ f ≤ 2); LiₐFePO₄ (0.90 ≤ a≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. Herein, the amounts of the binder and conductive material may be 1 wt% to 5 wt%, respectively, based on the total amount of the positive active material layer.

The binder improves binding properties of positive active material particles with one another and with a current collector, and the examples of the binder may be polyvinyl alcohol, carboxymethyl cellulose, hydroxypropyl cellulose, diacetyl cellulose, polyvinyl chloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like, but are not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use aluminum foil, a nickel foil, or a combination thereof, but is not limited thereto.

The positive active material layer may be formed by mixing an active material, a binder, and optionally a conductive material, in a solvent to prepare an active material composition, and coating the active material composition on a current collector. Such an active material layer preparation method is well known and thus is not described in detail in the present specification. The solvent may be N-methyl pyrrolidone, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone and the like. In addition, the alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with desirable battery performance and it may be well understood to one of ordinary skill in the related art.

Furthermore, the carbonate-based solvent may include a mixture of a cyclic carbonate and a linear carbonate. Herein, when the mixture of cyclic carbonate and linear carbonate mixed together in a volume ratio of about 1:1 to about 1:9 is used as an electrolyte, it may have enhanced performance.

When the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be methyl propionate, ethyl propionate, propyl propionate, or a combination thereof.

Herein, when the cyclic carbonate and the chain carbonate or the cyclic carbonate and the propionate-based solvent are mixed, they may be mixed in a volume ratio of about 1:1 to about 1:9 and thus performance of an electrolyte solution may be improved. In addition, when the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The organic solvent may further include an aromatic hydrocarbon-based solvent as well as the carbonate-based solvent. Herein, the carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound of Chemical Formula 1. 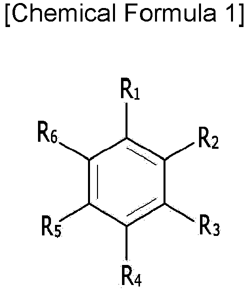 (In Chemical Formula 1, R₁ to R₆ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylene carbonate, or an ethylene carbonate-based compound of Chemical Formula 2, as an additive for improving a cycle-life. 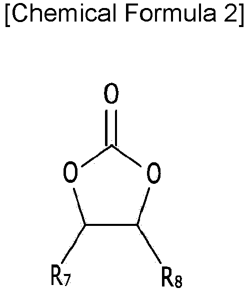 (In Chemical Formula 4, R₇ and R₈ are the same or different, and are selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and a fluorinated C1 to C5 alkyl group, and R₇ and R₈ are not both hydrogen.)

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the additive for improving a cycle-life may be used within an appropriate range.

The electrolyte may further include vinyl ethylene carbonate, propane sultone, succinonitrile, or a combination thereof, and the amount used may be appropriately adjusted.

The lithium salt dissolved in an organic solvent supplies a battery with lithium ions, basically operates the rechargeable lithium battery, and improves transportation of the lithium ions between positive and negative electrodes. Examples of the lithium salt include one or two or more one supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiPO₂F₂, LiN(CₓF₂ₓ₊₁SO₂, C_{y}F_{2y+1}SO₂), wherein x and y are natural numbers, for example an integer ranging from 1 to 20, lithium difluoro(bisoxolato) phosphate), LiCl, Lil, LiB(C₂O₄)₂ (lithium bis(oxalato) borate: LiBOB), and lithium difluoro(oxalate) borate(LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may also be disposed between the positive electrode and the negative electrode depending on a type of a rechargeable lithium battery. The separator may use polyethylene, polypropylene, polyvinylidene fluoride, or multilayers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment of the present invention. The rechargeable lithium battery according to an embodiment is illustrated as a prismatic battery, but is not limited thereto, and may include variously-shaped batteries such as a cylindrical battery and a pouch battery.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

### MODE FOR PERFORMING THE INVENTION

Hereinafter, examples of the present invention and comparative examples are described. These examples, however, are not in any sense to be interpreted as limiting the scope of the invention.

### (Example 1)

An artificial graphite coated with an amorphous carbon (soft carbon) negative electrode active material, a denka black conductive material, and H₃BO₃ were dry-mixed at a speed of 2000 rpm for 2 minutes. A carboxymethyl cellulose aqueous solution thickener with a 1 wt% concentration was added to the obtained dried-mixture and mixed at a speed of 2000 rpm for 2 minutes, and a carboxymethyl cellulose aqueous solution thickener with a 1 wt% concentration was additionally added to the resulting mixed product and additionally mixed at a speed of 2000 rpm for 2 minutes.

Water was added to the resulting mixture to adjust a content of a solid to 48 wt%, and mixed at a speed of 2000 rpm for 1 minute, and a styrene butadiene rubber binder was added thereto, and mixed at a speed of 2000 rpm for 5 minutes, thereby preparing a negative electrode active material slurry.

Herein, the mixing ratio of the negative electrode active material, the conductive material, the thickener, the binder, and H₃BO₃ was set to be 96.8:0.5:0.9:1.3:0.5 by weight ratio.

The negative electrode active material slurry was coated on a Cu foil current collector and dried followed by pressurizing it, thereby preparing a negative electrode.

Using the negative electrode, a lithium counter electrode, and an electrolyte, a half-cell was fabricated. The electrolyte was used by adding fluoroethylene carbonate to an electrolyte precursor in which 1.5 M LiPF₆ was dissolved in ethylene carbonate, ethyl methyl carbonate, and dimethyl carbonate (30:50:20 by volume ratio), with an amount of fluoroethylene carbonate of 5 wt% based on 100 wt% of the electrolyte precursor.

### (Example 2)

An artificial graphite coated with an amorphous carbon (soft carbon) negative electrode active material, a denka black conductive material, and H₃BO₃ were dry-mixed at a speed of 2000 rpm for 2 minutes. A carboxymethyl cellulose aqueous solution thickener with a 1 wt% concentration was added to the obtained dried mixture and mixed at a speed of 2000 rpm for 2 minutes, and a carboxymethyl cellulose aqueous solution thickener with a 1 wt% concentration was additionally added to the resulting mixed product and additionally mixed at a speed of 2000 rpm for 2 minutes.

Water was added to the resulting mixture to adjust a content of a solid to 48 wt%, and mixed at a speed of 2000 rpm for 1 minute, and a styrene butadiene rubber binder was added thereto, and mixed at a speed of 2000 rpm for 5 minutes, thereby preparing a negative electrode active material slurry.

Herein, the mixing ratio of the negative electrode active material, the conductive material, the thickener, the binder, and H₃BO₃ was set to be 96.3:0.5:0.9:1.3:1 by weight ratio.

Using the negative electrode active material slurry, a negative electrode and a half-cell were fabricated by the same procedure as in Example 1.

### (Example 3)

An artificial graphite coated with amorphous carbon (soft carbon) negative electrode active material, a denka black conductive material, and B₂O₃ were dry-mixed at a speed of 2000 rpm for 2 minutes. A carboxymethyl cellulose aqueous solution thickener with a 1 wt% concentration a 1 wt% concentration was added to the obtained dried-mixture, mixed at a speed of 2000 rpm for 2 minutes, a carboxymethyl cellulose aqueous solution thickener with a 1 wt% concentration solution was additionally added to the resulting mixed product, and additionally mixed at a speed of 2000 rpm for 2 minutes.

Water was added to the resulting mixture to adjust a content of a solid to 48 wt% and mixed at a speed of 2000 rpm for 1 minute, and a styrene butadiene rubber binder was added thereto and mixed at a speed of 2000 rpm for 5 minutes, thereby preparing a negative electrode active material slurry.

Herein, the mixing ratio of the negative electrode active material, the conductive material, the thickener, the binder, and B₂O₃ was set to be 96.3:0.5:0.9:1.3:1 by weight ratio.

Using the negative electrode active material slurry, a negative electrode and a half-cell were fabricated by the same procedure as in Example 1.

### (Comparative Example 1)

An artificial graphite coated with amorphous carbon (soft carbon) negative electrode active material and a denka black conductive material were dry-mixed at a speed of 2000 rpm for 2 minutes. A carboxymethyl cellulose aqueous solution thickener with a 1 wt% concentration was added to the obtained dried-mixture and mixed at a speed of 2000 rpm for 2 minutes, and a carboxymethyl cellulose aqueous solution thickener with a 1 wt% concentration was additionally added to the resulting mixed product and additionally mixed at a speed of 2000 rpm for 2 minutes.

Water was added to the resulting mixture to adjust a content of a solid to 48 wt%, and mixed at a speed of 2000 rpm for 1 minute, and a styrene butadiene rubber binder was added thereto and mixed at a speed of 2000 rpm for 5 minutes, thereby preparing a negative electrode active material slurry.

Herein, the mixing ratio of the negative electrode active material, the conductive material, the thickener, and the binder was set to be 97.3:0.5:0.9:1.3 by weight ratio.

Using the negative electrode active material slurry, a negative electrode and a half-cell were fabricated by the same procedure as in Example 1.

### (Comparative Example 2)

An aqueous solution in which H₃BO₃ was dissolved in water at a 0.5 wt% concentration was added to the artificial graphite coated with the amorphous carbon negative electrode active material used in Example 1. Herein, the added amount of the H₃BO₃ aqueous solution was the same as that of the carbon-based active material. The resulting product was heated at 90 °C while sufficiently shaking under a nitrogen stream, thereby removing water from the product.

Thereafter, the product from which water was removed was heated at 800 °C for 3 hours under the nitrogen stream, thereby coating H₃BO₃ on a surface of the the carbon-based active material. The prepared carbon-based negative electrode active material coated with H₃BO₃ and a denka black conductive material were dry-mixed at a speed of 2000 rpm for 2 minutes.

A carboxymethyl cellulose aqueous solution thickener with a 1 wt% concentration was added to the obtained dried mixture and mixed at a speed of 2000 rpm for 2 minutes, and a carboxymethyl cellulose aqueous solution thickener with a 1 wt% concentration was additionally added to the resulting mixed product and additionally mixed at a speed of 2000 rpm for 2 minutes.

Water was added to the resulting mixture to adjust a content of a solid to 48 wt%, and mixed at a speed of 2000 rpm for 1 minute, and a styrene butadiene rubber binder was added thereto, and mixed at a speed of 2000 rpm for 5 minutes, thereby preparing a negative electrode active material slurry.

Herein, the mixing ratio of the carbon negative electrode active material coated with H₃BO₃, the conductive material, the thickener, and the binder was set to be 97.8:0.5:0.9:1.3 by weight ratio, and the amount of H₃BO₃ was 0.5 wt% in 97.5 wt% of the negative electrode active material.

Using the negative electrode active material slurry, a negative electrode and a half-cell were fabricated by the same procedure as in Example 1.

### Experimental Example 1) Evaluation of high-rate charging rate characteristic

The half-cells according to Example 1 and Comparative Examples 1 and were constant current and constant voltage (CCCV) charged at 0.1 C, constant current (CC) discharged at 0.1 C; CCCV charged at 0.2 C and CC discharged at 2 C; and then CCCV charged at 2 C and CC discharged at 0.2 C. Herein, when the CC charge capacity during CCCV charge at 0.2 C was converted to 100 %, the charging rate of 2 C CC charged amount during CC charge at 2 C are as shown in Table 1.

**(Table 1)**

| | Charge rate (%) |
|---|---|
| Example 1 | 62.7 |
| Example 2 | 56.8 |
| Example 3 | 56.7 |
| Comparative Example 1 | 50.7 |
| Comparative Example 2 | 55.6 |

As shown in Table 1, Examples 1 to 3 using H₃BO₃ in the slurry preparation exhibited surprisingly excellent high-rate charge rate compared to Comparative Example 1 without using H₃BO₃, and exhibited surprisingly excellent higher than Comparative Example 2 in which the negative electrode active material was prepared by coating H₃BO₃ on the carbon-based negative electrode active material, by 7.1 %, even though H₃BO₃ was used.

From these results, when a boron compound is used in the negative electrode, the using it in the negative electrode slurry preparation may render to more improve the high-rate charging rate, rather than using it coated on the negative electrode active material.

### Experimental Example 2) Resistance characteristic measurement

After measuring the charging rate of the Experimental Example 1, the charge and discharge were performed under SOC50 (50 % charge capacity based on 100 % of entire battery charge capacity, which is 50 % discharged in a discharge state) to measure a resistance. The measured resistance refers to a charge transfer resistance (Rct) of the cell thin layer and the results are shown in Table 2, as Rct.

**(Table 2)**

| | Rct (Ω) |
|---|---|
| Example 1 | 3.07 |
| Comparative Example 1 | 3.77 |
| Comparative Example 2 | 4.52 |

As shown in Table 2, Example 1 in which H₃BO₃ was used in the slurry preparation exhibited lower Rct than Comparative Example 1 without using H₃BO₃, but Comparative Example 2 in which H₃BO₃ was used by coating it on the carbon-based negative electrode active material, even though H₃BO₃ was used, exhibited extremely increased Rct. It is considered that the reason why Rct was increased in Comparative Example 2 using the active material coated with the boron compound is that a binder layer with very much higher resistance is formed on the surface of the active material coated with the boron compound, and the high heat-treatment after coating the boron compound causes to slightly crystallize amorphous carbon coated on the negative electrode active material which reduces the area of the graphite edge being capable of inserting and desorbing lithium.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be examples but not limiting the present invention in any way.

## Claims

1. A negative electrode for a rechargeable lithium battery, comprising:
a negative electrode active material layer including a boron compound, a negative electrode active material, and an aqueous binder.

2. The negative electrode for the rechargeable lithium battery of claim 1, wherein the boron compound includes B₂O₃, H₃BO₃, or combinations thereof.

3. The negative electrode for the rechargeable lithium battery of claim 1, wherein an amount of the boron compound is 0.1 wt% to 3 wt% based on the total, 100 wt%, of the negative electrode active material layer.

4. The negative electrode for the rechargeable lithium battery of claim 1, wherein an amount of boron included in the negative electrode active material layer is 0.1 wt% to 3 wt% based on the total, 100 wt%, of the negative electrode active material layer.

5. The negative electrode for the rechargeable lithium battery of claim 1, wherein the negative electrode active material includes a silicon-based negative electrode active material, a carbon-based negative electrode active material, or combinations thereof.

6. The negative electrode for the rechargeable lithium battery of claim 1, wherein the boron compound and the negative electrode are presented in the negative electrode active material layer in a physical mixture.

7. The negative electrode for the rechargeable lithium battery of claim 1, wherein the negative electrode is prepared by coating an active material composition on a current collector, the active material composition being prepared by mixing the boron compound and the negative electrode active material in a solvent.

8. A rechargeable lithium battery, comprising:
a negative electrode of any one of claim 1 to claim 7;
a positive electrode comprising a positive active material; and
a non-aqueous electrolyte
